# EUROPÄISCHE PATENTSCHRIFT

(11) **EP 2 285 837 B1**
(45) Veröffentlichungstag und Bekanntmachung des Hinweises auf die Patenterteilung: **12.10.2011**
(21) Anmeldenummer: 09737928.3
(22) Anmeldetag: 12.03.2009
(51) Int. Cl.: C08F 2/58, C08F 20/02

(54) **VERFAHREN ZUR INITIIERUNG VON RADIKALISCHEN POLYMERISATIONEN**
METHOD FOR INITIATING RADICAL POLYMERIZATIONS
PROCÉDÉ POUR AMORCER DES POLYMÉRISATIONS RADICALAIRES

(30) Priorität: 28.04.2008 EP 08103743
(43) Veröffentlichungstag der Anmeldung: 23.02.2011
(73) Patentinhaber: Construction Research & Technology GmbH, 83308 Trostberg (DE)
(72) Erfinder: GRASSL, Harald, 84550 Feichten an der Alz (DE); MEZGER, Jochen, 84518 Garching an der Alz (DE); KRAUS, Alexander, 83552 Evenhausen (DE); ALBRECHT, Gerhard, 83209 Prien (DE)
(86) Internationale Anmeldenummer: PCT/EP2009/052889
(87) Internationale Veröffentlichungsnummer: WO 2009/132884

(56) Entgegenhaltungen:
- DE-A1- 4 308 716
- US-A- 3 464 960
- US-A- 3 573 180
- US-A- 4 411 745
- US-A- 5 549 807

## Beschreibung

Die Erfindung betrifft ein Verfahren zur Herstellung von Polymeren, das Polymer sowie die Verwendung des Polymers.

Zu den industriell bedeutsamsten Polymerisationstechniken gehören die radikalische Lösungs-, Emulsions- und Suspensionspolymerisation. Bei diesen Polymerisationstypen werden üblicherweise radikalische Polymerisationsinitiatoren, wie Peroxide oder Azoverbindungen oder Photoinitiatoren eingesetzt. Der Einsatz solcher Polymerisationsinitiatoren bedingt in der Regel folgende Nachteile:
- Erschwerte Kontrolle der Radikalkonzentration: Die Initiatoren müssen über längere Zeit zudosiert werden, damit die gewünschte Radikalkonzentration aufrechterhalten werden kann. Insbesondere eine schnelle Absenkung der Radikalkonzentration kann problematisch sein, wenn die Radikalbildung durch langsamen Zerfall bereits zudosierten Initiators erfolgt.
- Steuerung des Initiatorzerfalls: Der Zerfall des Polymerisationsinitiators und somit die Höhe der Radikalkonzentration ist von mehreren Faktoren abhängig - insbesondere von Temperatur, Lösungsmittel, pH-Wert, Konzentration, eventuell vorhandenem Coinitiator. Daraus folgt, dass die Radikalkonzentration nur schwer regulierbar ist. Dies kann unerwünscht breite Molekulargewichtsverteilungen der erhalten Polymere sowie sicherheitstechnische Probleme bezüglich der zugrunde liegenden Verfahrenstechnik bewirken.
- Thermischer Initiatorzerfall: Die erforderlichen Temperaturen können in vielen Fällen die Siedetemperaturen der Monomere übersteigen und so eine Polymerisation unter Druck notwendig machen. Thermisch labile Substanzen können nicht in solchen Systemen polymerisiert werden.
- Photolytischer Initatorzerfall: Die Zersetzung des Initiators mittels UV-Licht ermöglicht zwar eine Polymerisation bei niedrigen Temperaturen, ist jedoch großtechnisch in Batchverfahren kaum einsetzbar, da die Lichtintensitäten mit zunehmendem Abstand von der Lichtquelle stark abnehmen.
- Kosten: Die in der Technik eingesetzten radikalischen Polymerisationsinitiatoren sind normalerweise verhältnismäßig kostenungünstig.
- Toxizität: Einige Initiatoren bzw. deren Zerfallsprodukte sind gesundheitlich bedenklich.
- pH-Wert-Abhängigkeit: Bei Einsatz einiger Initiatorsysteme (insbesondere bei Redoxsystemen) ist man an einen bestimmten pH-Wert-Bereich gebunden, um eine hinreichende Initiierungsrate zu gewährleisten.
- Sicherheitsaspekte: Die Lagerung und der Transport von vielen Initiatoren (insbesondere von Peroxiden und Azoverbindungen) stellt in der Praxis ein reelles Problem dar.
- Herkömmlich betriebene Polymerisationsreaktoren können bei erhöhter Wärmeentwicklung u.a. auch deshalb außer Kontrolle geraten, weil mit ansteigenden Reaktortemperaturen die Zerfallsrate von Polymerisationsinitiatoren in der Regel stark zunimmt. Einem derart unkontrollierbaren Zustand kann häufig nur durch Zugabe von Inhibitoren begegnet werden.
- Unerwünschte Nebenreaktionen: Werden z.B. Peroxide als Initiatoren verwendet, so enthält die Reaktionsmischung auch ein starkes Oxidationsmittel. Dies kann dazu führen, daß oxidationsempfindliche Komponenten der Reaktionsmischung in unerwünschter Weise mit dem Peroxid in einer Nebenreaktion reagieren.

Aufgabe der vorliegenden Erfindung ist es somit, ein radikalisches Polymerisatonsverfahren bereitzustellen, in welchem vorstehend genannte Nachteile in Zusammenhang mit der Initiierung vermieden werden können.

Die Lösung dieser Aufgabe ist ein Verfahren zur Herstellung von Polymeren durch radikalische Polymerisation von Monomeren in Anwesenheit von Wasser, wobei elektrochemisch erzeugte Radikale zur Initiierung der radikalischen Polymerisation eingesetzt werden, gemäss Anspruch 1.

Elektrochemisch erzeugte Radikale im Sinne der vorliegenden Erfindung sind Radikale, welche aufgrund von Elektrolyse an Elektrodenoberfächen entstehen und unmittelbar oder mittelbar (z.B. durch Radikalübertragung) radikalische Polymerisation initiieren.

Die elektrochemisch initiierte radikalische Polymerisation ist aus verfahrenstechnischer Sicht einfach kontrollierbar: Die Radikalkonzentration kann einfach und genau über die Stromstärke gesteuert werden. Dadurch können letztendlich einheitlichere Polymere erhalten werden. Dies ist u.a. auch darauf zurückzuführen, dass die Monomerkonzentration aufgrund der genau einstellbaren Radikalkonzentration ideal - gemäß der Reaktivität des jeweiligen Monomertyps - eingestellt werden kann. Aufgrund der gut steuerbaren Radikalkonzentration kann relativ leicht annähernd isotherm polymerisiert werden, wodurch wiederum Bedingungen zur Herstellung von einheitlichen Polymeren geschaffen werden können. Sollte bei der Polymerisation die Reaktionsmischung überhitzen, so kann durch Herabsetzung der Stromstärke oder Abschalten einer Stromquelle die wärmeerzeugende Polymerisation unmittelbar gestoppt werden. Dies ist insbesondere in der großtechnischen Praxis als ein wichtiger sicherheitstechnischer Aspekt anzusehen.

Mittels der elektrochemisch initiierten radikalischen Polymerisation können hohe Umsätze erzielt werden. Weiterhin können Zerfallsprodukte von Initiatoren vermieden werden, so dass das erhaltene Polymer ohne ggf. gesundheitsschädliche Abbauprodukte des Initiators erhalten werden kann.

Gemäss Erfindung läuft die radikalische Polymerisation in der Elektrolyseflüssigkeit einer eine Kathode und Anode aufweisenden Elektrolyseeinrichtung ab, wobei die Elektrolyseflüssigkeit die Monomere sowie das Wasser aufweist und die Elektrolysespannung 2,0 bis 100 V, bevorzugt 2,8 bis 50 V, besonders bevorzugt 3,0 bis 15 V, beträgt.

Die elektrochemisch erzeugten Radikale entstehen dabei an der Anode, bzw. an der Grenzfläche zwischen Anode und Elektrolyseflüssigkeit. Höchstwahrscheinlich ist in der Regel davon auszugehen, dass die mit diesem Verfahren elektrochemisch an der Anode erzeugten Radikale zumindest im Wesentlichen als Hydroxylradikale vorliegen. Deutliche Hinweise auf diesen Mechanismus sind folgenden Veröffentlichungen zu entnehmen: B.Marselli, J. Garcia-Gomez, P-A. Michaud, M.A. Rodrigo, Ch.Comninellis, J. Electrochem. Soc. 150(2003)79; G.Sine, Ch. Comninellis, Electrochimica acta 50(2005)2249-2254. Die anodisch erzeugten Radikale können in der Elektrolyseflüssigkeit, welche radikalisch polymerisierbare Monomere enthält, eine Polymerisation starten.

Insgesamt kann gesagt werden, dass in diesem Verfahren eine kostengünstige Radikalquelle eingesetzt wird. Weiterhin kann das Verfahren als energiesparend angesehen werden, da ohne weiteres bei Raumtemperatur gearbeitet werden kann. Unerwünschte Nebenreaktionen mit Initiatoren können vermieden werden, da der Einsatz von zusätzlichen, nicht elektrochemisch erzeugten radikalischen Polymerisationsinitiatoren nicht erforderlich ist.

Gemäss Erfindung liegt die Anode in Form einer Diamantelektrode vor, welche einen elektrisch leitfähigen (bevorzugt metallischen) Grundkörper aufweist, auf dem eine Diamantschicht aufgebracht ist, die mit chemischen Elementen dotiert ist, welche nicht unter die 4. Hauptgruppe des Periodensystems der Elemente fallen. In der Regel ist die Diamantschicht mit Elementen der 3. Hauptgruppe, bevorzugt mit Bor oder mit Elementen der 5. Hauptgruppe, bevorzugt mit Stickstoff und/oder Phosphor, dotiert. Meist ist die Diamantschicht mit Bor dotiert und der Borgehalt in der Diamantschicht beträgt 10 bis 10 000 ppm, bevorzugt 10 bis 4 000 ppm, besonders bevorzugt 100 bis 3 000 ppm. Durch die chemisch inerte Oberfläche der Diamantelektrode sind Elektronenübergänge zu organischen Verbindungen stärker eingeschränkt als bei herkömmlichen Elektroden. Die oxidierende oder reduzierende Wirkung auf die eingesetzten Monomere ist viel geringer. Die Oberfläche der in dem erfindungsgemäßen Verfahren eingesetzten Diamantelektrode wird nicht von dem entstehenden Polymer beschlagen bzw. beschichtet, wenn das Polymer im Elektrolyten löslich ist. Die Diamantoberfläche zeigt sich selbst bei hohen Strömungsgeschwindigkeiten der Elektrolyseflüssigkeit sowohl im sauren als auch im alkalischen pH-Wert-Bereich stabil und abriebfest. Bor dotierte Diamantelektroden sind kommerziell erhältlich und zwar auch in Größen, die sich für den großindustriellen Maßstab eignen. Es soll erwähnt sein, dass derartige Diamantelektroden kommerziell bei der Abwasserreinigung eingesetzt werden.

Nicht nur die Anode, sondern auch die Kathode ist bevorzugt als Diamantelektrode ausgebildet. Die Kathode kann aber auch, der chemischen Umgebung angepasst, aus den gängigen Verwendeten Elektrodenmaterialien bestehen, wie Platin, Kupfer, Silber, Eisen, Aluminium, Titan, Quecksilber, Blei, Cadmium, Zinn, Blei- und Cadmium-Amalgame, Graphit oder Glas-Kohlenstoff.

In der Regel enthält die Elektrolyseflüssigkeit 15 bis 99 Gew.-%, bevorzugt 25 bis 80 Gew.-%, besonders bevorzugt 40 bis 70 Gew.-%, Wasser und 1 bis 85 Gew.-%, bevorzugt 20 bis 75 Gew.-%, besonders bevorzugt 30 bis 60 Gew.-% Monomer.

Häufig enthält die Elektrolyseflüssigkeit einen Hilfselektrolyten, mit welchem die Leitfähigkeit der Elektrolyseflüssigkeit erhöht wird. Der Gehalt des Hilfselektrolyten in der Elektrolyseflüssigkeit beträgt oft ca. 0,1 bis 10 Gew.-%. Als Hilfselektrolyten kommen beispielsweise in Frage: Protonensäuren, wie organische Säuren, insbesondere Methylsulfonsäure, Benzolsulfonsäure oder Toluolsulfonsäure, mineralische Säuren, wie Schwefelsäure oder Phosphorsäure und Neutralsalze. Letztere können beispielsweise folgende Kationen enthalten: Metallkationen wie Lithium, Natrium, Kalium, Nebengruppenmetallkationen wie Eisen, Kupfer, Zink, Quarternierte Stickstoffverbindungen wie Ammonium, Tetraalkylammoniumkationen (wie z.B. Tetramethylammonium). Als Anionen kommen in Frage: Fluorid, Tetrafluorborat, Sulfonate, wie Methylsulfonat, Benzolsulfonat, Toluolsulfonat, Sulfat, Methylsulfat, Sulfite, Phosphate, wie Methylphosphat, Ethylphosphat, Dimethylphosphat, Phosphonate, wie Methylphosphonatmethylester, Phosphite, Nitrate, Nitrite, Halogenide, Pseudohalogenide und Hydroxide. Weiterhin sind geeignet basische Verbindungen wie Alkali-oder Erdalkalimetallhydroxide, Alkali- oder Erdalkalimetallcarbonate, Alkali-oder Erdalkalimetallhydrogencarbonate. Wird das Wasser in Form von Trinkwasser oder demineralisertem Wasser bereitgestellt, so sollte zweckmäßigerweise ein Hilfselektrolyt neben den Monomeren eingesetzt werden. Dies gilt nicht, wenn eingesetzte Monomere (z.B. Acrylsäure) selbst erheblich zur Leitfähigkeit beitragen. Die Leitfähigkeit der Elekrolyseflüssigkeit sollte möglichst mindestens ca. 100 µS/cm, bevorzugt mindestens 500 µS/cm, betragen.

Die Elektrolyseflüssigkeit kann auch in Wasser schwer- oder unlösliche Monomere sowie einen Lösungsvermittler enthalten. Als Lösungsvermittler kommen häufig (insbesondere dann, wenn entsprechende Redox-Nebenprodukte nicht erwünscht sind) vorzugsweise Komponenten in Frage, welche keine hohe Redoxempfindlichkeit aufweisen. Als Lösungsvermittler werden bevorzugt Ether, insbesondere Tetrahydrofuran, eingesetzt. Sich in der Praxis anbietende weitere Lösungsvermittler wären: Etherverbindungen wie Dioxan, Polyether, Polyethylenglykole, primäre, sekundäre und tertiäre Alkohole (wie Methanol, Ethanol, n-Propanol, Isopropanol, tert-Butylalkohol, 2- Butanol, Ethandiol, Propan(1,2)diol oder Propan(1,3)diol), Ketone (wie Aceton oder Methylethylketon), Acetonitril, Dimethylformamid, Dimethylsulfoxid(DMSO) oder ionische Flüssigkeiten allgemein bestehend z.B.: aus Dialkylimidazolium-, N,N',N"-Hexaalkylguanidinium-, Alkylpyridinum-, Tetralkylammonium- und/oder Tetraalkylphoshphonium-Kationen und Chlorid, Bromid, Iodid, Tetrafluorborat, Tetrachloraluminat, Tetrachlorferrat(III), Hexafluorphosphat, Trifluormethansulfonat, Alkylsulfonat, Benzolsulfonat als Anionen.

Die radikalische Polymerisation wird meist als eine Lösungspolymerisation, als eine Emulsionspolymerisation oder als eine inverse Suspensionspolymerisation durchgeführt.

Es können Radikalakzeptoren eingesetzt werden, auf die die elektrochemisch erzeugten Radikale ihre Radikalfunktion übertragen können.

Bei den Radikalakzeptoren handelt es sich häufig um als sog. Kettenregler (Verbindungen auf die sich die Radikalfunktion übertragen lässt) bekannte Verbindungen, wie Mercaptane. Als Radikalakzeptoren sind insbesondere zu nennen: Mercaptoalkanole (wie Mercaptoethanol), Mercaptocarbonsäuren (wie 3-Mercaptopropionsäure), Tetrahydrofuran, tert-Butanol, iso-Propanol, wasserlösliche tert-Alkylverbindungen, Ascorbinsäure, Peroxide wie Peroxodisulfate oder Hydroperoxide wie tert-Buthylhydroperoxid, Amine, Phosphite, Aromaten mit benzylischen Wasserstoffen wie z.B. Toluol, Halogenhaltige Kohlenwasserstoffe wie Methylenchlorid, Chloroform. Der Einsatz von Radikalakzeptoren bzw. Radikalüberträgern ermöglicht es, die initiierende Radikalfunktion weiter von der Anodenoberfläche zu entfernen und somit den effektiven Reaktionsraum zu vergrößern.

Werden als Radikalüberträger Substanzen verwendet die von der Controlled Radical Polymerisation (CRP) her bekannt sind, so kann die Polymerisation durch eine elektrochemische Initiierung in eine lebend radikalische Polymerisation übergehen. Diese Methode eröffnet die Herstellung von Polymeren mit Blockstruktur, Sternpolymeren, Propfcopolymeren, Telechelen sowie generell von Polymeren mit besonders geringer Polydispersität. Es bieten die sich aus der (reversed) Atomic Transfer Radical Polymerisation (ATRP), der Reversible Chain-Transfer Polymerisation (RAFT), der Nitroxide Mediated Polymerisation (NMP), Diphenylethylen-Polymerisation (DPE) bekannten Agenzien an. Für die (reversed-) ATRP werden als Katalysatoren Halogenide oder Oxide von Übergangsmetallen verwendet, die durch (meist mehrzähnige) Liganden komplexiert und (zumindest teilweise) in Lösung gebracht werden. Am gebräuchlichsten sind: Cu-I-Salze und Cu-II-Salze, insbesondere -Oxid, -Chlorid oder-Bromid, Fe-II-Salze und Fe-III-Salze, wie Fe-II-Chlorid oder -Sulfat, Ni-II-Salze und Ni-III-Salze, wie -Chlorid oder-Bromid. Als Liganden werden meist 2,2'-Bipyridin (ggf. auch substituiert) z.B.: 4,4'-Dialkyl-2,2'-bipyridin, Pentamethyldiethylentriamin (PMDETA), Tris(2-Dimethylaminoethyl)amin, Triphenylphosphin oder Schiffsche Basen aus 2-Pyridinaldehyd und primären Aminen verwendet. Im Falle von RAFT sind dies Dithioester, Trithiocarbonate und Xanthogenate, im Falle von NMP- N-Oxide wie z.B. 2,2,6,6-Tetramethyl-piperidin (TEMPO) und im Falle der DPE-Polymerisation 1,1-Diarylethene wie 1,1-Diphenylethylen.

Normalerweise weist die Elektrolyseflüssigkeit einen pH-Wert von 0 bis 14, bevorzugt 1 bis 12, auf. Dieser pH-Wert wird mittels einer Standardglaselektrode bestimmt.

Häufig wird die Elektrolysespannung so eingestellt, dass die Stromdichte 0,05 bis 100 mA/cm², bevorzugt 0,1 bis 80 mA/cm² und besonders bevorzugt 1 bis 40 mA/cm², beträgt.

Als Elektrolysespannung wird eine Gleich- oder Wechselspannung eingesetzt, wobei im Falle einer Wechselspannung die Umpolungsfrequenz bevorzugt 50 Hz bis 1 mHz beträgt.

Die Monomere liegen als neutrale Monomere, als kationische Monomere und/oder als anionische Monomere vor. Grundsätzlich können alle radikalisch polymerisierbaren Monomere eingesetzt werden. Beispielsweise können verwendet werden:
- Arylalkene und Heteroarylalkene, ggf. substituiert, wie z.B.: Styrol, alpha-Methyl-Styrol, Vinylpyridin, 4-Vinylphenylsulfonsäure, 4-Vinylbenzoesäure, 4-Vinylphthalsäure und deren Salze
- Allyl- und Methallylverbindungen wie z.B.: Allylalkohol, Allyl(polyalkoxy)ether, Allylsulfonsäure, Methallylalkohol, Methallyl(polyalkoxy)ether, Methallylsulfonsäure, 3-Allyloxy-1,2-Propandiol, 3-Allyloxy-1,2- propandiol, 3-Allyloxy-1,2- propandiol(Polyalkoxyl)ether, 3-Methallyloxy-1,2- propandiol, 3-Methallyloxy-1,2- propandiol(Polyalkoxyl)ether, Isoprenol, Isoprenolalkylether, Isoprenoyl(polyalkoxy)ether
- Vinylether wie z.B. 1-Butylvinylether, Isobutylvinylether, Aminopropylvinylether, Ethylenglykolmonovinylether, 4-Hydroxybutylmonovinylether, Vinyletheralkoxylate,
- Vinylester wie z.B. Vinylacetat, Carbamidsäurevinylester
- Vinylische Aldehyde und Ketone wie z.B. Acrolein, Methacrolein, Vinyl-1,3-dioxolan, Crotonaldehyd, 3-Oxo-1-Buten
- Acryl- und Methacrylverbindungen
   ■ Acrylsäure und Methacrylsäure, deren Salze und deren Ester wie z.B. 2-Hydroxyethylacrylat, 2-Hydroxethylmethacrylat, Hydroxypropylacrylat, Hydroxypropylmethacrylat, Methylmethacrylat, Ethylmethacrylat, Methylacrylat, (Methyl)-Polyoxyalkyl Acrylate, (Methyl)PolyoxyalkylMethacrylate, 2,3-hydroxypropyl(meth)acrylat,
   ■ Acrylamide und Methacrylamide, ggf. substituiert, wie Acrylamid, Methacrylamid , N,N-Dimethylacrylamid, N-isopropyl-acrylamid, N-Methacryloyl-glycinamid, Acrylamidomethylpropylsulfonsäure (AMPS), Acryloyloxyethyltrimethylammoniumchlorid
   ■ Acrylnitril und Methacrylnitril
- Ungesättigte Polycarbonsäuren und deren Derivate wie z.B.: Maleinsäure, Maleinsäureanhydrid, Maleinsäuremono- und diester wie z.B.: Dimethylmaleat, Monomethylmaleat, Diethylmaleat, Ethylmaleat, Dibutylmaleat, Poly(oxyalkylenmonomethylether)monomaleat, Poly(oxyalkylenmonomethylether)dimaleat, Maleinsäuramide wie z.B. Maleinsäure-Sulfanilsäureamid, Poly(oxyalkylenmonomethylether)maleinsäureamid, Poly(oxyalkylen)maleinsäureamid, Maleinsäuremonoanilid, Maleinsäureimide wie z.B. Maleinimid, N-Ethylmaleinimid, Itaconsäure und Itaconsäureanhydrid, Itaconsäuremono(di)ester wie. Z.B.: Dimethylitaconat, Monomethylitaconat, Diethylitaconat, Monoethylitaconat,
- Mono-poly(oxyalkylenmonomethylether)itaconat, Di-poly(oxyalkylenmonomethylether)itaconat, Itaconsäureamid wie z.B.: mono-Methylpolyoxyalkylenitaconamid, 2,4-Hexandiensäure
- Vinylische Schwefel- und Phosphorverbindungen
   ■ Alkylvinylsulfone
   ■ Vinylsulfone
   ■ Alkensulfonsäuren wie z.B. 2-Acrylolamido-2-methylpropansulfonsäure, Vinylbenzolsulfonsäure, Vinylsulfonsäure, Acrylsäure(3 Sulfopropyl)ester
   ■ Methallylsulfonat, Methacrylsäureethylsulfat, [2-(Acryloyloxy)ethyl]trimethylammoniummethylsulfat
   ■ Vinylphosphonsäure
- N-Vinylamide wie z.B.: 1-Vinyl-2-pyrrolidon, 1-Vinyl-2-piperidin, 1-Vinyl-2-caprolactam, 5-Vinylcarbazol, 2-Vinylpyridin,4-Vinylpyridin, 2-Methyl-5-Vinylpyridin, N-Vinylacetamid, N-Vinylformamid
- Phosphor haltige Vinylverbindungen wie Phosphonsäuren und Phosphate wie z.B.: 2-Hydroxyethylacrylat-Phosphat, 2-Hydroxyethylmethacrylat-Phosphat, Phosphocolmaleamid, Phosphocolacrylamid, Phosphocolmethacrylamid.
- Alkene und deren Derivate.: 2-Buten-1,4-Diol (sowie dessen Polyoxyalkylate), 3,4-Dihydroxy1-Buten (sowie dessen Polyoxyalkylate), Dimethylvinylcarbinol (sowie dessen Polyoxyalkylate), Prenol (sowie dessen Polyoxyalkylate), 3-Methyl-3-Buten-2-ol (sowie dessen Polyoxyalkylate)
Im Falle aller Monomere mit anionischen Gruppen (Carbonsäuren, Phosphonsäuren, Sulfonsäuren, Phosphaten) sind auch deren Salze aus der Gruppe der Alkali-, Erdalkalimetalle, Ammonium-Verbindungen geeignet.

Bezüglich der Ausgestaltung der Elektrolyseeinrichtung, welche häufig eingesetzt wird, kann folgendes gesagt werden: Vorzugsweise werden die Elektroden planparallel angeordnet, weil bei dieser Ausführungsform bei kleinem Elektrodenspalt eine homogene Stromverteilung gegeben ist. Generell sollte die Elektrodenoberfläche bzw. der Raum zwischen den Elektroden so beschaffen sein, dass ein möglichst intensiver Stoffaustausch zwischen der Lösung und der Oberflächendiffusionsschicht stattfindet. Zu diesem Zwecke können in den Raum zwischen den Elektroden Strömungsbrecher aus einem nicht elektrisch leitfähigen Material angebracht werden, die ein turbulentes Strömungsverhalten begünstigen. Diese Strömungsbrecher können beispielsweise die Form von Rauten, Rippen oder Kanälen haben. Auch eine planparallele Anordnung von Elektrodengittern, Streckmetallelektroden, Elektrodennetze, über die das Reaktionsgemisch geleitet wird, ist möglich. Die fertigen Elektrodenflächen können eine feine Struktur aus Rippen, Kanälen, Rauten usw. aufweisen. Vorzugweise können in diesem Fall die Elektroden einzeln oder zu mehreren gestapelt angewendet werden. Im letzteren Fall handelt es sich um die Verwendung von Stapelelektroden, die in der so genannten Plattenstapelzelle seriell bipolar geschaltet werden können. Geteilte Zellen mit planparalleler Elektrodenanordnung oder kerzenförmigen Elektroden kommen vorzugsweise dann zum Einsatz, wenn der Katholyt vom Anolyten (das ist dann die Elektrolyseflüssigkeit) getrennt sein muss, um z.B. chemischen Nebenreaktionen auszuschließen oder um die nachfolgende Stofftrennung zu vereinfachen. Als Trennmedium können Ionenaustauschermembran, mikroporöse Membranen, Diaphragmen, Filtergewebe aus nicht Elektronen leitenden Materialien, Glasfritten sowie poröse Keramiken eingesetzt werden. Vorzugweise werden auch bei geteilten Zellen die Elektroden planparallel angeordnet, da bei dieser Ausführungsform bei kleinen Elektrodenspalten eine homogene Stromverteilung gegeben ist. Diese beiden erläuterten Zellentypen können in der Dimensionierung ihrer Größe von Labor- über Technikumsgröße bis zur Produktion entsprechend angepasst werden. Die ungeteilte Elektrolysezelle wird mit dem Reaktionsgemisch durchströmt, wobei die Strömungsgeschwindigkeit häufig 0,1 m/s-3 m/s beträgt. Im Falle der geteilten Elektrolysezelle beträgt die Strömungsgeschwindigkeit des Anolyten häufig 0,1m/s-3m/s. Das Verfahren kann auch unter Druck betrieben werden.

In der Regel beträgt der Abstand zwischen der Kathode und der Anode 0,2 bis 30 mm, bevorzugt 1 bis 10 mm.

In einer Ausführungsform der Erfindung wird die radikalische Polymerisation in kontinuierlicher Betriebsweise durchgeführt. Mehrere der oben beschriebenen Elektrolyseeinrichtungen können so hintereinander geschaltet werden, dass die Elektrolyseflüssigkeit von einer Elektrolyseeinrichtung in die nächste geleitet wird. Die Reaktionsmischung kann im Kreislauf gefahren werden. Im Prinzip können praktisch alle bekannten kontinuierlichen Verfahrensapparaturen mit entsprechenden Elektrolysezellen ausgestattet werden, bzw. selbst Bestandteil von Elektrolysezellen sein (in diesem Zusammenhang können beispielsweise Rohr- und Rohrbündelreaktoren, Schlaufenreaktoren sowie Spinning-Disc-Reaktoren genannt werden). Im Falle eines Chargenbetriebs können an einen Rührbehälter ein oder mehrere Kreisläufe eingerichtet sein, in denen vorstehend genannte Reaktionszellentypen eingebaut sind.

In einer weiteren Ausführungsform der vorliegenden Erfindung wird die radikalische Polymerisation in diskontinuierlicher oder in semikontinuierlicher Betriebsweise in der Elektrolyseeinrichtung durchgeführt. In diesem Fall können die Anode und/oder die Kathode als Rührelementssegmente einer Rührvorrichtung ausgestaltet sein, mit welcher die Elektrolyseeinrichtung bestückt ist. Weiterhin können die Elektrolyseeinrichtungen in eine oder mehrere Bypass-Leitungen integriert werden, die an den Rührkessel angeschlossen sind und durch die das Reaktionsgemisch gepumpt wird.

Nach dem erfindungsgemässen Verfahren sind Polymare herstellbar.

Diese Polymere können als Copolymere vorliegen, welche Säuremonomerstruktureinheiten und Polyethermakromonomerstruktureinheiten enthalten. Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid). Polyethermakromonomere sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Typisch ist die Säuremonomerstruktureinheit gemäß einer der allgemeinen Formeln (la), (Ib), (Ic) und/oder (Id) 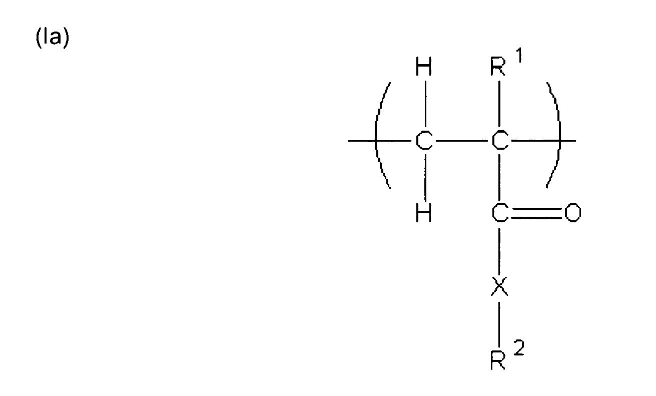 mit
R¹ gleich oder verschieden (d.h. innerhalb des Copolymers entweder gleich oder verschieden substituiert) sowie repräsentiert durch H und/oder eine unverzweigte oder verzweigte C₁ - C₄ Alkylgruppe (bevorzugt H oder CH₃);
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 (bevorzugt NH-C₄H₈) und/oder durch eine nicht vorhandene Einheit (d.h., dass -X nicht vorhanden ist);
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 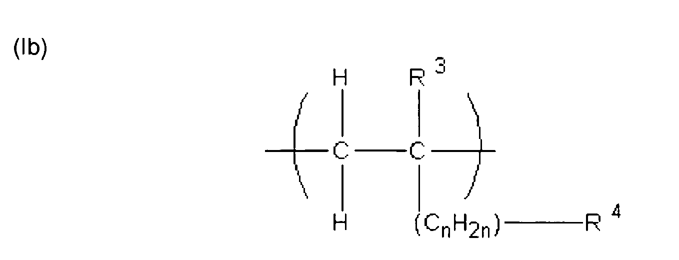 mit
R³ gleich oder verschieden sowie repräsentiert durch H und/oder eine unverzweigte oder verzweigte C₁ - C₄ Alkylgruppe (bevorzugt CH₃);
n = 0,1,2,3 oder 4
R⁴ gleich oder verschieden sowie repräsentiert durch SO₃H, PO₃H₂, O-PO₃H₂ und/oder para substituiert vorliegendes C₆H₄-SO₃H; 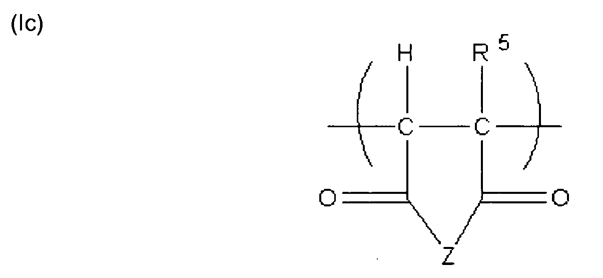 mit
R⁵ gleich oder verschieden sowie repräsentiert durch H und/oder eine unverzweigte oder verzweigte C₁ - C₄ Alkylgruppe (bevorzugt H);
Z gleich oder verschieden sowie repräsentiert durch O und/oder NH; 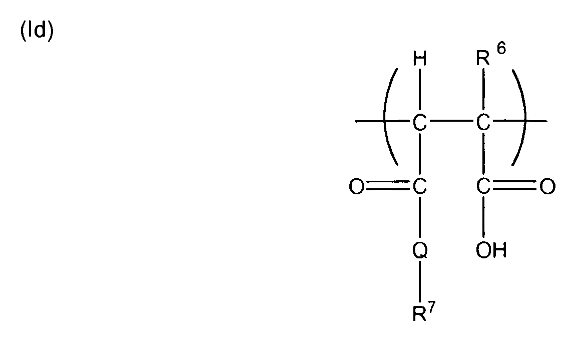 mit
R⁶ gleich oder verschieden sowie repräsentiert durch H und/oder eine unverzweigte oder verzweigte C₁ - C₄ Alkylgruppe (bevorzugt H);
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)ₐ -R⁹ mit m = 0, 1, 2, 3 oder 4, e = 0, 1, 2, 3 oder 4, A' = C_{x'}H_{2x'} mit x' = 2, 3, 4 oder 5 (bevorzugt x' = 2) und/oder CH₂C(C₆H₅)H-, α = eine ganze Zahl von 1 bis 350 (bevorzugt α = 15 - 200) mit R⁹ gleich oder verschieden sowie repräsentiert durch eine unverzweigte oder verzweigte C₁ - C₄ Alkylgruppe (bevorzugt CH₃).

Bezüglich R², R⁴ und R⁷ in den Strukturformeln la, Ib und Id ist zu bemerken, dass die entsprechenden Säurefunktionen, insbesondere bei Zugabe von Basen, (im Polymer) deprotoniert vorliegen können (Salzbildung).

Die vorstehend und nachstehend benutzte Ausdrucksweise " gleich oder verschieden" soll jeweils Konstanz oder Variabilität innerhalb des durch das erfindungsgemäße Verfahren erzeugten Copolymers bedeuten.

In der Praxis wird als Säuremonomer häufig Methacrylsäure, Acrylsäure, Maleinsäure, Maleinsäureanhydrid, ein Halbester der Maleinsäure oder eine Mischung aus mehreren dieser Komponenten eingesetzt.

In einer typischen Ausführungsform liegt die Polyethermakromonomerstruktureinheit gemäß einer der allgemeinen Formeln (IIa), (IIb) und/oder (IIc) vor 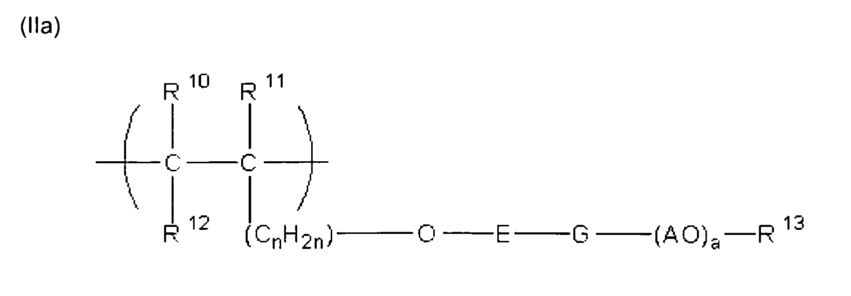 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe (bevorzugt H und/oder CH₃);
E gleich oder verschieden sowie repräsentiert durch eine unverzweigte oder verzweigte C₁ - C₆ Alkylengruppe (C₁, C₂, C₃, C₄, C₅ oder C₆ zwar jeweils typisch, jedoch bevorzugt C₂ und C₄), eine Cyclohexylgruppe, CH₂-C₆H₁₀, ortho, meta oder para substituiert vorliegendes C₆H₄ und/oder eine nicht vorhandene Einheit (d.h., dass -E nicht vorhanden ist);
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt (d.h. dass -G nicht vorhanden ist);
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃ (bevorzugt H, CH₃); 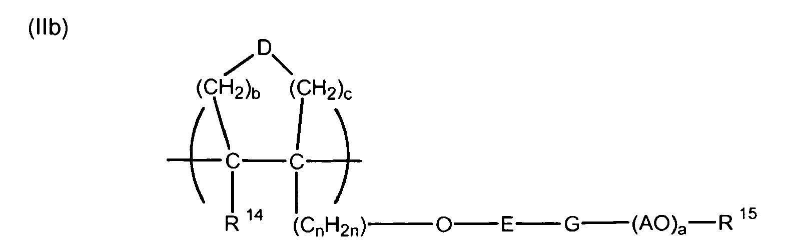 mit
R¹⁴ gleich oder verschieden sowie repräsentiert durch H und/oder eine unverzweigte oder verzweigte C₁ - C₄ Alkylgruppe (bevorzugt H);
E gleich oder verschieden sowie repräsentiert durch eine unverzweigte oder verzweigte C₁ - C₆ Alkylengruppe (bevorzugt C₂H₄), eine Cyclohexylgruppe, CH₂-C₆H₁₀, ortho, meta oder para substituiert vorliegendes C₆H₄ und/oder durch eine nichtvorhandene Einheit (d.h. -E ist nicht vorhanden);
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit (d.h. -G ist nicht vorhanden) vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
D gleich oder verschieden sowie repräsentiert durch eine nicht vorhandene Einheit (d.h. -D ist nicht vorhanden), NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃ (bevorzugt H); 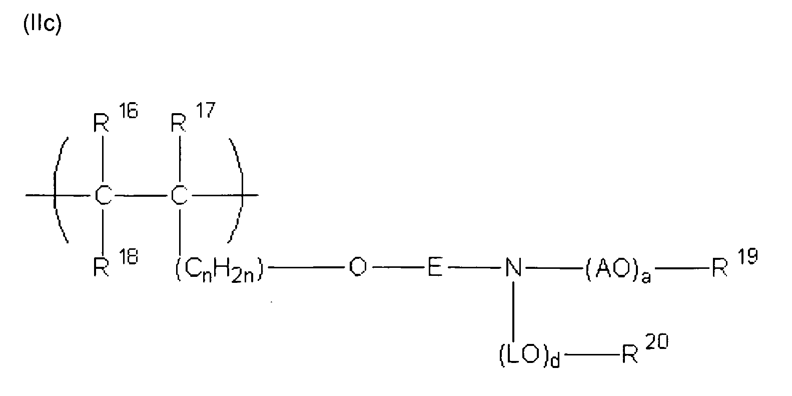 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe (bevorzugt H und/oder CH₃);
E gleich oder verschieden sowie repräsentiert durch eine unverzweigte oder verzweigte C₁ - C₆ Alkylengruppe (bevorzugt C₂H₄ oder C₄H₈), eine Cyclohexylgruppe, CH₂-C₆H₁₀, ortho, meta oder para substituiert vorliegendes C₆H₄ und/oder durch eine nicht vorhandene Einheit (d.h. -E ist nicht vorhanden);
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 (bevorzugt x = 2) und/oder CH₂-CH(C₆-H₅);
a gleich oder verschieden sowie repräsentiert durch eine ganze Zahl von 2 bis 350 (bevorzugt 10 - 200);
d gleich oder verschieden sowie repräsentiert durch eine ganze Zahl von 1 bis 350 (bevorzugt 10 - 200);
R¹⁹ gleich oder verschieden sowie repräsentiert durch H und/oder eine unverzweigte oder verzweigte C₁ - C₄ Alkylgruppe (bevorzugt H),
R²⁰ gleich oder verschieden sowie repräsentiert durch H und/oder eine unverzweigte C₁ - C₄ Alkylgruppe (bevorzugt H).
Allgemein kann gesagt werden, dass die Poly-Alkoxyseitenketten (AO)ₐ der Polyethermakromonomere zwar meist reine Poly-Ethoxyseitenketten sind, wobei jedoch nicht selten auch gemischte Poly-Alkoxyseitenketten, insbesondere solche, die sowohl Propoxy- als auch Ethoxy-Gruppen enthalten, vorliegen.
In der Praxis wird häufig als Polyethermakromonomer alkoxyliertes Isoprenol (alkoxyliertes 3-Methyl-3-buten-1-ol) und/oder alkoxylierter Hydroxybutylvinylether und/oder alkoxylierter (Meth)allylalkohol (Allylalkohol bevorzugt gegenüber Methallylalkohol) mit normalerweise jeweils einer arithmetisch mittleren Zahl an Oxyalkylengruppen von 4 bis 400, häufig von 10 bis 50, eingesetzt. Besonders bevorzugt ist alkoxylierter Hydroxybutylvinylether.

Neben dem Säuremonomer und dem Polyethermakromonomer können noch weitere Monomertypen zum Einsatz kommen.

Die Polyethermakromonomerstruktureinheiten können weiterhin in Form von alkoxylierten Prenol-, Dimethylcarbinolstruktureinheiten, alkoxylierten, vinylierten Methylpolyethylenglykolstruktureinheiten, alkoxylierten Acrylaten bzw. Methacrylaten, alkoxylierten Acrylamiden bzw. Methacrylamiden, Poly(oxyalkylenmonoalkylether)methacrylaten oder Poly(oxyalkylenmonoalkylether)acrylaten vorliegen. Die Molekulargewichte des Polymers lassen sich mittels Stromstärke (Radikalkonzentration) und/oder durch Verwendung von Kettenreglern beliebig einstellen. Die Molmassen können in der Regel zwischen 5000 g/mol und 300000 g/mol eingestellt werden.

Weiterhin können die vorstehend beschriebenen Polymere für hydraulische Bindemittel und/oder für latenthydraulische Bindemittel verwendet werden. Insbesondere aufgrund des typischen, besonders einheitlichen Aufbaus der Polymere ist deren Dispergierwirkung in den oben genannten Bindemitteln in der Regel besonders gut.

Die Verwendung des Polymers ist jedoch nicht darauf begrenzt, denn mit dem erfindungsgemäßen Verfahren können beispielsweise für die Lebensmittel- und für die Pharmaindustrie hochreine Polymere hergestellt werden (ohne Initiatoren bzw. Initiatorzersetzungsprodukte).

Die Erfindung soll nachstehend anhand von Ausführungsbeispielen näher beschrieben werden.

### Beispiel 1)

### Polymerisation von einem Poly(ethylenglykol)monomethylethermethacrylat mit einer ungeteilten Durchflusszelle

Anode: Bor dotierte Diamanelektrode mit 2000 ppm Bor
Kathode: Bor dotierte Diamanelektrode mit 2000 ppm Bor
Elektrodenabstand: 2 mm
Spannung: 3 V Gleichstrom
Stromstärke: 0,1 A
Elektrolyt: wässrige H₂SO₄
Elektrodenfläche der Anode: 10 cm²

Es werden 30,0 g Poly(ethylenglykol)monomethylethermethacrylat (Mₙ =475 g/mol) in 120,00 g H₂O gemischt und mit 0,5 g konzentrierter H₂SO₄ versetzt. Diese Lösung wird während des ganzen Versuchs mit Stickstoff gespült. Die Polymerisation wird bei Raumtemperatur durchgeführt.

Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird. Nach 3 h ist eine deutliche Viskositätssteigerung zu erkennen. Das Gelpermeations Chromatogramm (GPC) zeigt ein Polymer mit einem Gewichtsmittel von 260000 g/mol und einen vollständigen Umsatz des Monomers.

### Beispiel 2)

Copolymerisation von Poly(ethylenglykol)monomethylethermethacrylat mit Methacrylsäure und Kettenregler mit einer ungeteilten Durchflusszelle und wässriger Schwefelsäure als Elektrolyt

### Der Aufbau und das Verfahren wie Beispiel 1.

Es werden 30,0 g Poly(ethylenglykol)monomethylethermethacrylat (Mₙ =475 g/mol) in 120,00 g H₂O und 5,43 g Methacrylsäure zugegeben, gemischt und mit 0,5 g konzentrierter H₂SO₄ sowie 0,27 g 3-Mercaptopropionsäure versetzt. Diese Lösung wird während des ganzen Versuchs mit Stickstoff gespült. Die Polymerisation wird bei Raumtemperatur durchgeführt. Es wurde eine Stromstärke von 0,3 A bei 3,5 V eingestellt. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird. Nach 6 h ist eine deutliche Viskositätssteigerung der klaren Lösung zu erkennen. Das Gelpermeations Chromatogramm (GPC) zeigt ein Polymer mit einem Gewichtsmittel von 50000 g/mol und einen vollständigen Umsatz der eingesetzten Monomere. Die Polymerlösung wurde anschliessend mit 12,0g NaOH 20%ig auf pH 6,5 neutralisiert.

### Beispiel 3)

### Copolymerisation von Poly(ethylenglykol)monomethylethermethacrylat mit Methacrylsäure und Kettenregler mit einer ungeteilten Durchflusszelle und Salzsäure als Elektrolyt

### Der Aufbau und das Verfahren wie Beispiel 1)

Es werden 30,0g Poly(ethylenglykol)monomethylethermethacrylat (Mₙ =475g/mol) in 120,00g H₂O und 5,43 g Methacrylsäure zugegeben, gemischt und mit 1,47 g HCl 25 % und 0,54g 3-Mercaptopropionsäure versetzt. Diese Lösung wird während des ganzen Versuchs mit Stickstoff gespült. Die Polymerisation wird bei Raumtemperatur durchgeführt.

Es wurde eine Stromstärke von 0,3 A bei 4,3 V eingestellt. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird. Nach 7 h ist eine Viskositätssteigerung der klaren Lösung zu erkennen. Das Gelpermeations Chromatogramm (GPC) zeigt ein Polymer mit einem Gewichtsmittel von 32745 g/mol und Polymergehalt von 82 %.Die Polymerlösung wurde anschließend mit 12,5g NaOH 20%ig auf pH 6,5 neutralisiert.

### Beispiel 4)

### Polymerisation von einem Poly(ethylenglykol)monomethylethermethacrylat mit einer ungeteilten Durchflusszelle bei pH 7

### Der Aufbau und das Verfahren wie Beispiel 1.

Es werden 30,0 g Poly(ethylenglykol)monomethylethermethacrylat (Mₙ =475 g/mol) in 120,00 g H₂O gemischt und mit 0,89 g K₂SO₄ versetzt. Diese Lösung wird mit NaOH 20%ig auf pH 7 eingestellt. Diese Lösung wird während des ganzen Versuchs mit Stickstoff gespült. Die Polymerisation wird bei Raumtemperatur durchgeführt. Es wurde eine Stromstärke von 0,1 A bei 4,0 V eingestellt. Während der Reaktion wird mit NaOH 2,5%ig der pH-Wert bei 7 gehalten. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird. Nach 7h ist eine deutliche Viskositätssteigerung der klaren Lösung zu erkennen. Das Gelpermeations Chromatogramm (GPC) zeigt ein Polymer mit einem Gewichtsmittel von 141000 g/mol und Polymergehalt von 87 %.

### Beispiel 5)

### Copolymerisation von 3-Methyl-3-Buten-1-ol-Ethoxylat (= Isoprenol-PEG500) mit 2-Hydroxyethylacrylat in einer ungeteilten Durchflusszelle bei pH 1

### Der Aufbau und das Verfahren wie Beispiel 1)

Es werden 30,0 g 3-Methyl-3-Buten-1-ol-Ethoxylat (0,06 mol) (M_{w} =500 g/mol) in 120,00 g H₂O gemischt und mit 1,5 g konzentrierter H₂SO₄ versetzt. Es werden anschließend bei Raumtemperatur 10,44 g Hydroxyethylacrylat (0,09 mol) und 0,54 g 3-Mercaptopropionsäure zugegeben.

Diese Lösung wird während des ganzen Versuchs mit Stickstoff gespült. Die Polymerisation wird bei Raumtemperatur durchgeführt. Es wurde eine Stromstärke von 0,3 A bei 4,2 V eingestellt.

Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird. Nach 4 h ist eine deutliche Viskositätssteigerung der klaren Lösung zu erkennen. Das Gelpermeations Chromatogramm (GPC) zeigt ein Polymer mit einem Gewichtsmittel von 21070 g/mol und einem Polymergehalt von 56 %.

### Beispiel 6)

### Polymerisation von 2-Hydroxyethylacrylat in einer Tetrahydrofuran/Wasser-Mischung mit einer ungeteilten Durchflusszelle

### Der Aufbau und das Verfahren wie Beispiel 1)

Es werden 30,0 g 2-Hydroxyethylacrylat in 60,0 g Wasser und 60,0 g Tetrahydrofuran gelöst. Als Elektrolyt werden 0,5 g K₂SO₄, 0,5 g 3-Mercaptopropionsäure und 1,0 g H₂SO₄ 98 % zugegeben und gelöst. Diese Lösung wird nicht mit Stickstoff gespült. Es wurde eine Stromstärke von 0,3 A bei 4,0 V eingestellt.
Die Polymerisation wird bei Raumtemperatur durchgeführt.
Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 100-mal die Elektrodenoberfläche, bevor die Reaktion beendet wird.
Nach 6 h zeigt das Gelpermeations Chromatogramm (GPC) ein Polymer mit einem Gewichtsmittel von 19400 g/mol und einem Polymergehalt von 71 %.

### Beispiel 7)

### Polymerisation von Acrylsäure in einer Tetrahydrofuran/Wasser-Mischung mit einer ungeteilten Durchflusszelle bei pH 1

Anode: Bor dotierte Diamantelektrode mit 2000 ppm Bor
Kathode: Bor dotierte Diamantelektrode mit 2000 ppm Bor
Elektrodenabstand: 2 mm
Spannung: 5,9 V Gleichstrom
Stromstärke: 1,3 A
Elektrolyt: wässrige H₂SO₄
Elektrodenfläche der Anode: 52 cm²

Der Aufbau ist ähnlich den vorangegangenen Beispielen, jedoch wurde ein größerer Versuchsaufbau verwendet. Das Vorgehen war dasselbe wie in vorherigen Beispielen.

Es werden 54,0 g Acrylsäure in 60,0g Wasser und 27,0 g Tetrahydrofuran gelöst. Als Elektrolyt werden 2,0 g H₂SO₄, 1,04 g 3-Mercaptopropionsäure zugegeben und gelöst. Diese Lösung wird nicht mit Stickstoff gespült. Es wurde eine Stromstärke von 1,3 A bei 5,9 V eingestellt.
Die Polymerisation wird bei Raumtemperatur durchgeführt.
Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 90-mal die Elektrodenoberfläche, bevor die Reaktion beendet wird.
Nach 5 h zeigt das Gelpermeations Chromatogramm (GPC) ein Polymer mit einem Gewichtsmittel von 29154 g/mol und einem Polymergehalt von 80 %. Die Polydispersität des Polymers beträgt 1,44.

### Beispiel 8)

### Copolymerisation von einem

Poly(ethylenglykol)monomethylethermethacrylat mit Methacrylsäure, Kettenregler und Tetrahydrofuran als Lösungsvermittler mit einer ungeteilten Durchflusszelle und wässriger Schwefelsäure als Elektrolyt

### Der Aufbau und das Verfahren wie Beispiel 7

Es werden 30,0 g Poly(ethylenglykol)monomethylethermethacrylat (Mₙ =500 g/mol) in 80,00 g H₂O, 40,0 g Tetrahydrofuran und 10,32 g Methacrylsäure zugegeben, gemischt und mit 1,0 g konzentrierter H₂SO₄ und 0,52 g 3-Mercaptopropionsäure versetzt. Diese Lösung wird während des ganzen Versuchs mit Stickstoff gespült. Die Polymerisation wird bei Raumtemperatur durchgeführt. Es wird eine Stromstärke von 1,3 A bei 5,2 V eingestellt. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 50-mal die Elektrodenoberfläche, bevor die Reaktion beendet wird. Nach 3 h ist eine deutliche Viskositätssteigerung der klaren Lösung zu erkennen. Gelpermeations Chromatogramm (GPC) zeigt ein Polymer mit einem Gewichtsmittel von 43800 g/mol und den vollständigen Umsatz der eingesetzten Monomere. Das Tetrahydrofuran wurde anschließend mittels Vakuum-Destillation entfernt. Die Polymerlösung wurde anschliessend mit 19,27g NaOH 20%ig auf pH 6,5 neutralisert.

### Beispiel 9)

### Polymerisation von Acrylsäure in einer Tetrahydrofuran/Wasser-Mischung mit einer ungeteilten Durchflusszelle bei pH 2

Es werden 54,0 g Acrylsäure in 60,0 g Wasser und 27,0 g Tetrahydrofuran gelöst. Als Elektrolyt werden 2,0 g H₂SO₄, 1,04 g 3-Mercaptopropionsäure zugegeben und gelöst. Die Lösung wurde mit 6,50 g NaOH 20%ig auf pH 2 eingestellt. Diese Lösung wird nicht mit Stickstoff gespült. Es wurde eine Stromstärke von 1,3 A bei 5,9 V eingestellt. Die Polymerisation wird bei 40 °C durchgeführt. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert.
Die Lösung fließt somit im Kreis und passiert so ca. 120-mal die Elektrodenoberfläche, bevor die Reaktion beendet wird. Nach 7 h zeigt das Gelpermeations Chromatogramm (GPC) ein Polymer mit einem Gewichtsmittel von 29848 g/mol und einem Polymergehalt von 50 %. Die Polydispersität des Polymers beträgt 1,43.

### Beispiel 10) Copolymerisation von Poly(ethylenglykol)monomethylethermethacrylat mit Methacrylsäure und Kettenregler mit einer ungeteilten Durchflusszelle und wässriger Schwefelsäure als Elektrolyt

### Der Aufbau und das Verfahren wie Beispiel 7.

Es werden 60,0 g Poly(ethylenglykol)monomethylethermethacrylat (Mₙ =475 g/mol) in 72,00g H₂O und 10,32 g Methacrylsäure zugegeben, gemischt und mit 2,0 g konzentrierter H₂SO₄ und 1,04 g 3-Mercaptopropionsäure versetzt. Diese Lösung wird während des ganzen Versuchs mit Stickstoff gespült. Die Polymerisation wird bei Raumtemperatur durchgeführt. Es wurde eine Stromstärke von 1,3 A bei 5,3 V eingestellt. Die Lösung wird mit einer Pumpe durch eine Durchflusszelle befördert. In dieser Durchflusszelle sind die beiden Elektroden mit einem Abstand von 2 mm befestigt. Die Lösung strömt durch den 2 mm breiten Spalt. Die Lösung verlässt die Zelle und wird wieder in den Vorlagebehälter befördert. Die Lösung fließt somit im Kreis und passiert so ca. 50-mal die Elektrodenoberfläche, bevor die Reaktion beendet wird. Nach 5h ist eine deutliche Viskositätssteigerung der klaren Lösung zu erkennen. Das Gelpermeations Chromatogramm (GPC) zeigt ein Polymer mit einem Gewichtsmittel von 54121 g/mol und den vollständigen Umsatz der eingesetzten Monomere.

Die Austestung der dispergierenden Wirkung der erfindungsgemäßen Polymere erfolgte in einer Mörtelmischung gemäß (DIN EN 1015-3).

### Mischablauf Mörtelmischung:

Es werden 600 g Zementpulver trocken homogenisiert und in einen RILEM-Mischer gegeben. Dann wird die entsprechend einem W/Z-Wert benötigte Menge Wasser zugegeben und 30 s bei 140 U/min (Stufe I) gemischt. Die Zugabe des Sandgemisches erfolgt anschließend bei laufendem Mischer mit Hilfe eines Trichters und es wird 30 s bei 140 U/min (Stufe I) gemischt. Nach einer Mischpause von 1,5 min und gesäuberten Rändern vom Mischer wird eine entsprechende Menge Fließmittel zugegeben. Es wird weitere 60 s bei 285 U/min (Stufe II) gemischt und anschließend das Fließmaß (Ausbreitmaß) durch 15-maliges Klopfen auf einem Klopftisch mit Hägermann-Konus bestimmt.

### Rezeptur der Mörtelmischung für den Mörteltest

| | Mörteltest | |
|---|---|---|
| Zusammensetzung | S/Z-Wert^{(a)}= 2.2 | Gewicht [g] |
| Zuschläge | Quarzsand 30 % | 178.2 |
| | Normsand 0/0.25 70 % | 415.8 |
| Zement | CEM 142.5R^{(b)} | 270.0 |
| Fließmittel^{(c)} | (20%-ige Lösung) | 2.7 |
| Wasser | | (d) |

| | | |
|---|---|---|
| (a) S/Z-Wert = Sand/Zement-Wert = Σ Sand [g] + Zement [g] (b) Zementherkunft: Karlstadt (Deutschland) (c) 0.2 Masse-% Feststoff auf Zement (d) Die benötigte Wassermenge ist abhängig vom eingestellten W/Z-Wert^{(e)} entsprechend dem verwendeten Fließmittel. (e) W/Z-Wert = Wasser/Zement-Wert = Σ Wasser [g] + Zement [g] | | |

### Mörtelergebnisse:

| Polymer-Nr. | Dos.^{(a)} | W/Z-Wert^{(b)} | Ausbreitmaß^{(c)} [cm] | | | |
|---|---|---|---|---|---|---|
| | | | 0' | 30' | 60' | 90' |
| Nullmischung | 0 | 0,56 | 24,7 | 23,8 | 23,3 | 23,1 |
| Glenium^{[R]} 27 | 0,24 | 0,49 | 24,8 | 24,3 | 24,4 | 24,6 |
| Beispiel 2 | 0,24 | 0,49 | 23,6 | 22,2 | 22,3 | 22,1 |
| Beispiel 3 | 0,24 | 0,49 | 23,8 | 23 | 22,6 | 22,7 |
| Beispiel 8 | 0,2 | 0,425 | 24,9 | 23,4 | 22,5 | 22,0 |

| | | | | | | |
|---|---|---|---|---|---|---|
| (a) Dos. = Dosierung [Masse% Polymer bezogen auf Zement] (b) W/Z-Wert = Wasser/Zement-Wert: Gibt die benötigte Wassermenge wieder, um bei konstanter Zementmenge einen fließfähigen Mörtel zu erzeugen. (c) Ausbreitmaß, bestimmt nach 0, 30, 60 und 90 min. | | | | | | |

Die hergestellten Polymere zeigen eine deutliche Wasserreduktion bezogen auf die Nullmischung ohne Zusatzmittel. Die Verflüssigende Wirkung ist vergleichbar oder deutlich besser als das marktübliche Fliessmittel Glenium^{[R]} 27.

## Patentansprüche

1. Verfahren zur Herstellung von Polymeren durch radikalische Polymerisation von Monomeren in Anwesenheit von Wasser, wobei elektrochemisch erzeugte Radikale zur Initiierung der radikalischen Polymerisation eingesetzt werden **dadurch gekennzeichnet, dass** die radikalische Polymerisation in der Elektrolyseflüssigkeit einer eine Kathode und Anode aufweisenden Elektrolyseeinrichtung abläuft, die Elektrolyseflüssigkeit die Monomere sowie das Wasser aufweist und die Elektrolysespannung 2,0 bis 100 V beträgt und die Anode in Form einer Diamantelektrode vorliegt, welche einen elektrisch leitfähigen, bevorzugt metallischen, Grundkörper aufweist, auf dem eine Diamantschicht aufgebracht ist, die mit chemischen Elementen dotiert ist, welche nicht unter die 4. Hauptgruppe des Periodensystems der Elemente fallen.

2. Verfahren nach Anspruch 1, **dadurch gekennzeichnet, dass** die Diamantschicht mit Elementen der 3. Hauptgruppe, bevorzugt mit Bor oder mit Elementen der 5. Hauptgruppe, bevorzugt mit Stickstoff und/oder Phosphor, dotiert ist.

3. Verfahren nach Anspruch 2, **dadurch gekennzeichnet, dass** die Diamantschicht mit Bor dotiert ist und der Borgehalt in der Diamantschicht 10 bis 10 000 ppm, bevorzugt 10 bis 4 000 ppm, besonders bevorzugt 100 bis 3 000 ppm, beträgt.

4. Verfahren nach einem der Ansprüche 1 bis 3, **dadurch gekennzeichnet, dass** die Elektrolyseflüssigkeit 15 bis 99 Gew.-%, bevorzugt 25 bis 80 Gew.-%, besonders bevorzugt 40 bis 70 Gew.-%, Wasser und 1 bis 85 Gew.-%, bevorzugt 20 bis 75 Gew.-%, besonders bevorzugt 30 bis 60 Gew.-% Monomer enthält.

5. Verfahren nach einem der Ansprüche 1 bis 4, **dadurch gekennzeichnet, dass** die Elektrolyseflüssigkeit in unpolar vorliegender Form vorliegende Monomere sowie einen Lösungsvermittler enthält, so dass das Wasser und die in unpolar vorliegender Form vorliegenden Monomere in einer Phase vorliegen, wobei als Lösungsvermittler bevorzugt Ether, insbesondere Tetrahydrofuran, eingesetzt werden.

6. Verfahren nach einem der Ansprüche 1 bis 5, **dadurch gekennzeichnet, dass** die radikalische Polymerisation als eine Lösungspolymerisation, als eine Emulsionspolymerisation oder als eine inverse Suspensionspolymerisation durchgeführt wird.

7. Verfahren nach einem der Ansprüche 1 bis 6, **dadurch gekennzeichnet, dass** Radikalakzeptoren eingesetzt werden, auf die die elektrochemisch erzeugten Radikale ihre Radikalfunktion übertragen können.

8. Verfahren nach einem der Ansprüche 1 bis 7, **dadurch gekennzeichnet, dass** die Elektrolyseflüssigkeit einen pH-Wert von 0 bis 14, bevorzugt 1 bis 12, aufweist.

9. Verfahren nach einem der Ansprüche 1 bis 8, **dadurch gekennzeichnet, dass** die Elektrolysespannung so eingestellt ist, dass die Stromdichte 0,05 bis 100 mA/cm², bevorzugt 0,1 bis 80 mA/cm² und besonders bevorzugt 1 bis 40 mA/cm², beträgt.

10. Verfahren nach Anspruch 9, **dadurch gekennzeichnet, dass** als Elektrolysespannung eine Gleich- oder Wechselspannung eingesetzt wird, wobei im Falle einer Wechselspannung die Umpolungsfrequenz bevorzugt 50 Hz bis 1 mHz beträgt.

11. Verfahren nach einem der Ansprüche 1 bis 10, **dadurch gekennzeichnet, dass** die Monomere als neutrale Monomere, als kationische Monomere und/oder als anionische Monomere vorliegen.

12. Verfahren nach einem der Ansprüche 1 bis 11, **dadurch gekennzeichnet, dass** der Abstand zwischen der Kathode und der Anode 0,2 bis 30 mm, bevorzugt 1 bis 10 mm beträgt.

13. Verfahren nach einem der Ansprüche 1 bis 12, **dadurch gekennzeichnet, dass** die radikalische Polymerisation in diskontinuierlicher Betriebsweise in der Elektrolyseeinrichtung durchgeführt wird.

14. Verfahren nach Anspruch 13, **dadurch gekennzeichnet, dass** die Anode und/oder die Kathode als Rührelementssegmente einer Rührvorrichtung ausgestattet sind, mit welcher die Elektrolyseeinrichtung bestückt ist.

15. Verfahren nach einem der Ansprüche 1 bis 12, **dadurch gekennzeichnet, dass** die radikalische Polymerisation in kontinuierlicher Betriebsweise durchgeführt wird.

16. Verfahren nach Anspruch 15, **dadurch gekennzeichnet, dass** mehrere von jeweils eine Kathode und Anode aufweisenden Elektrolyseeinrichtungen hintereinander geschaltet sind und die Elektrolyseflüssigkeit von der einen Elektrolyseeinrichtung in die nächste geleitet wird.

## Claims

1. Process for the preparation of polymers by free radical polymerization of monomers in the presence of water, electrochemically produced free radicals being used for initiating the free radical polymerization, **characterized in that** the free radical polymerization takes place in the electrolysis liquid of an electrolysis apparatus having a cathode and anode, the electrolysis liquid comprises the monomers and the water, and the electrolysis voltage is 2.0 to 100 V and the anode is present in the form of a diamond electrode which has an electrically conductive, preferably metallic, base body to which a diamond layer is applied, which diamond layer is doped with chemical elements which are not included among the 4th main group of the Periodic Table of the Elements.

2. Process according to Claim 1, **characterized in that** the diamond layer is doped with elements of the 3rd main group, preferably with boron, or with elements of the 5th main group, preferably with nitrogen and/or phosphorus.

3. Process according to Claim 2, **characterized in that** the diamond layer is doped with boron and the boron content in the diamond layer is 10 to 10 000 ppm, preferably 10 to 4000 ppm, particularly preferably 100 to 3000 ppm.

4. Process according to any of Claims 1 to 3, **characterized in that** the electrolysis liquid contains 15 to 99% by weight, preferably 25 to 80% by weight, particularly preferably 40 to 70% by weight, of water and 1 to 85% by weight, preferably 20 to 75% by weight, particularly preferably 30 to 60% by weight, of monomer.

5. Process according to any of Claims 1 to 4, **characterized in that** the electrolysis liquid contains monomers present in nonpolar form and a solubilizer, so that the water and the monomers present in nonpolar form are present in one phase, ether, in particular tetrahydrofuran, preferably being used as the solubilizer.

6. Process according to any of Claims 1 to 5, **characterized in that** the free radical polymerization is carried out as a solution polymerization, as an emulsion polymerization or as an inverse suspension polymerization.

7. Process according to any of Claims 1 to 6, **characterized in that** free radical acceptors to which the electrochemically produced free radicals can transfer their free radical function are used.

8. Process according to any of Claims 1 to 7, **characterized in that** the electrolysis liquid has a pH of 0 to 14, preferably 1 to 12.

9. Process according to any of Claims 1 to 8, **characterized in that** the electrolysis voltage is adjusted so that the current density is 0.05 to 100 mA/cm², preferably 0.1 to 80 mA/cm² and particularly preferably 1 to 40 mA/cm².

10. Process according to Claim 9, **characterized in that** the electrolysis voltage used is a DC or AC voltage, the polarity reversal frequency preferably being 50 Hz to 1 mHz in the case of an AC voltage.

11. Process according to any of Claims 1 to 10, **characterized in that** the monomers are present as neutral monomers, as cationic monomers and/or as anionic monomers.

12. Process according to any of Claims 1 to 11, **characterized in that** the spacing between the cathode and the anode is 0.2 to 30 mm, preferably 1 to 10 mm.

13. Process according to any of Claims 1 to 12, **characterized in that** the free radical polymerization is carried out in a batchwise mode of operation in the electrolysis apparatus.

14. Process according to Claim 13, **characterized in that** the anode and/or the cathode are configured as stirring element segments of a stirring apparatus, with which the electrolysis apparatus is equipped.

15. Process according to any of Claims 1 to 12, **characterized in that** the free radical polymerization is carried out in a continuous mode of operation.

16. Process according to Claim 15, **characterized in that** a plurality of electrolysis apparatuses having in each case a cathode and anode are connected in series and the electrolysis liquid is passed from one electrolysis apparatus into the next.

## Revendications

1. Procédé pour la préparation de polymères par polymérisation radicalaire de monomères en présence d'eau, des radicaux générés par voie électrochimique étant utilisés pour l'initiation de la polymérisation radicalaire, **caractérisé en ce que** la polymérisation radicalaire se déroule dans le liquide d'électrolyse d'un dispositif d'électrolyse présentant une cathode et une anode, le liquide d'électrolyse présente les monomères ainsi que de l'eau et la tension d'électrolyse est de 2,0 à 100 V et l'anode se trouve sous forme d'une électrode en diamant, qui présente un corps de base électriquement conducteur, de préférence métallique, sur lequel est appliquée une couche de diamant, qui est dopée d'éléments chimiques qui ne relèvent pas du 4ème groupe principal du système période des éléments.

2. Procédé selon la revendication 1, **caractérisé en ce que** la couche de diamant est dopée avec des éléments du 3ème groupe principal, de préférence avec du bore ou des éléments du 5ème groupe principal, de préférence avec de l'azote et/ou du phosphore.

3. Procédé selon la revendication 2, **caractérisé en ce que** la couche de diamant est dopée avec du bore et la teneur en bore dans la couche de diamant est de 10 à 10 000 ppm, de préférence de 10 à 4000 ppm, de manière particulièrement préférée de 100 à 3000 ppm.

4. Procédé selon l'une quelconque des revendications 1 à 3, **caractérisé en ce que** le liquide d'électrolyse contient 15 à 99% en poids, de préférence 25 à 80% en poids, de manière particulièrement préférée 40 à 70% en poids, d'eau et 1 à 85% en poids, de préférence 20 à 75% en poids, de manière particulièrement préférée 30 à 60% en poids de monomère.

5. Procédé selon l'une quelconque des revendications 1 à 4, **caractérisé en ce que** le liquide d'électrolyse contient des monomères se trouvant sous forme non polaire ainsi qu'un promoteur de solubilisation, de manière telle que l'eau et les monomères se trouvant sous une forme non polaire se trouvent dans une phase, en utilisant comme promoteur de solubilisation de préférence de l'éther, en particulier du tétrahydrofuranne.

6. Procédé selon l'une quelconque des revendications 1 à 5, **caractérisé en ce que** la polymérisation radicalaire est réalisée en tant que polymérisation en solution, en émulsion ou en suspension inversée.

7. Procédé selon l'une quelconque des revendications 1 à 6, **caractérisé en ce que** des accepteurs de radicaux sont utilisés sur lesquels les radicaux générés par voie électrochimique peuvent transférer leur fonction de radical.

8. Procédé selon l'une quelconque des revendications 1 à 7, **caractérisé en ce que** le liquide d'électrolyse présente un pH de 0 à 14, de préférence de 1 à 12.

9. Procédé selon l'une quelconque des revendications 1 à 8, **caractérisé en ce que** la tension d'électrolyse est réglée de manière telle que la densité de courant est de 0,05 à 100 mA/cm², de préférence de 0,1 à 80 mA/cm² et de manière particulièrement préférée de 1 à 40 mA/cm².

10. Procédé selon la revendication 9, **caractérisé en ce qu'**on utilise, comme tension d'électrolyse, une tension continue ou alternative, où, dans le cas d'une tension alternative, la fréquence d'inversion est de préférence de 50 Hz à 1 mHz.

11. Procédé selon l'une quelconque des revendications 1 à 10, **caractérisé en ce que** les monomères se trouvent sous forme de monomères neutres, de monomères cationiques et/ou de monomères anioniques.

12. Procédé selon l'une quelconque des revendications 1 à 11, **caractérisé en ce que** la distance entre la cathode et l'anode est de 0,2 à 30 mm, de préférence de 1 à 10 mm.

13. Procédé selon l'une quelconque des revendications 1 à 12, **caractérisé en ce que** la polymérisation radicalaire est réalisée en mode d'exploitation discontinu dans le dispositif d'électrolyse.

14. Procédé selon la revendication 13, **caractérisé en ce que** l'anode et/ou la cathode sont équipées comme segments d'éléments d'agitation d'un dispositif d'agitation qui équipe le dispositif d'électrolyse.

15. Procédé selon l'une quelconque des revendications 1 à 12, **caractérisé en ce que** la polymérisation radicalaire est réalisée en mode d'exploitation continu.

16. Procédé selon la revendication 15, **caractérisé en ce que** plusieurs dispositifs d'électrolyse présentant à chaque fois une cathode et une anode sont commutés les uns derrière les autres et le liquide d'électrolyse est guidé d'un dispositif d'électrolyse dans le suivant.
